# EUROPÄISCHE PATENTSCHRIFT

(11) **EP 2 523 876 B1**
(45) Veröffentlichungstag und Bekanntmachung des Hinweises auf die Patenterteilung: **09.07.2014**
(21) Anmeldenummer: 11719535.4
(22) Anmeldetag: 10.05.2011
(51) Int. Cl.: B65G 1/02, B65G 13/075

(54) **BREMSFÖRDERROLLE MIT HEMMREGLER**
BRAKE TRANSPORT ROLLER COMPRISING INHIBITION REGULATOR
ROULEAU DE TRANSPORT DE FREIN POURVU D'UN RÉGULATEUR D'ARRÊT

(30) Priorität: 20.09.2010 DE 102010041057; 12.05.2010 DE 102010028918
(43) Veröffentlichungstag der Anmeldung: 21.11.2012
(73) Patentinhaber: BITO-Lagertechnik Bittmann GmbH, 55590 Meisenheim (DE)
(72) Erfinder: HERDER, Frank, 55606 Bärweiler (DE)
(74) Vertreter: Richardt Patentanwälte PartG mbB
(86) Internationale Anmeldenummer: PCT/EP2011/057542
(87) Internationale Veröffentlichungsnummer: WO 2011/141472

(56) Entgegenhaltungen:
- EP-A1- 1 219 549
- EP-A1- 1 847 485
- DE-A1- 2 619 654
- DE-B- 1 295 472
- JP-U- 62 100 912
- US-A- 1 695 075
- US-A- 3 376 965
- US-A- 4 482 042
- US-A- 6 131 717

## Beschreibung

Die Erfindung betrifft eine Bremsförderrolle nach Anspruch 1, insbesondere eine Bremsförderrolle für eine Rollenleiste oder für eine Rollenbahn, sowie eine Rollenbahn (Anspruch 13), eine Rollenleiste (Anspruch 15) und einen Bausatz (Anspruch 17) mit der Bremsförderrolle.

Aus dem Stand der Technik sind Bremsförderrollen bekannt. Die DE 601 05 538 T2 beschreibt eine Bremsförderrolle, die sich unterhalb einer vorbestimmten Rotationsgeschwindigkeit frei drehen kann. Bei einer vorbestimmten Rotationsgeschwindigkeit setzt ein Bremsmoment ein. DE 1 531 843 A betrifft eine Bremsrolle für eine Rollenfördereinrichtung, bei der Unwuchten innerhalb eines Räderwerks ein mit der Drehzahl ansteigendes Drehmoment bewirken. US 4,000,796 beschreibt eine Bremsrolle für eine Fördereinrichtung, die in einer Rollenleiste eingesetzt werden kann. Eine weitere Bremsrolle ist aus DE 1 246 557 B bekannt. DE 81 22 369 U1 und DE 2005 007 882 U1 offenbaren Laufrollen, bei denen Bremselemente an einem Zahnrad eingreifen, das mit der Rolle verbunden ist. EP 1 847 485 A1 offenbart eine Förderrolle mit einer Hemmeinrichtung, welche innerhalb der Förderrolle einen Freilauf bildet.

DE 1 967 660 U beschreibt eine Bremsvorrichtung in einer Bremsrolle mit einem Hemmungsrad, das gegenüber einem in dieses eingreifenden, trägheitsbelasteten Hemmungsanker bewegt wird.

US 3,376,965 beschreibt eine Vorrichtung nach dem Oberbegriff des Anspruchs 1.

Demgegenüber liegt der Erfindung die Aufgabe zugrunde, eine verbesserte Bremsförderrolle zu schaffen.

Die der Erfindung zugrunde liegende Aufgabe wird mit den Merkmalen der unabhängigen Patentansprüche gelöst. Bevorzugte Ausführungsformen der Erfindung sind in den abhängigen Patentansprüchen angegeben.

Die Bremsförderrolle weist eine Trommel, eine Trommeldrehachse und einen Hemmregler auf. Der Hemmregler weist einen Hemmungsrad und ein Hemmstück auf. Das Hemmungsrad ist dabei mit der Trommeldrehachse verbunden und zusammen mit der Trommel um die Trommeldrehachse drehbar. Die Besonderheit eines Hemmreglers ist, dass dieser im Gegensatz zu Bremsreglern nicht dauernd, sondern nur zeitweise auf ein bewegtes Bauteil einwirkt.

Die Ablaufgeschwindigkeit der Bewegungen des Hemmungsrads und des Hemmstücks hängen von der Größe des Antriebsmoments ab. Das Antriebsmoment wird durch das zu transportierende Transportgut bestimmt, indem das Transportgut die Trommel und das Hemmungsrad antreibt, dadurch dass es aufgrund des Gefälles der Transportstrecke durch die Schwerkraft beschleunigt wird. Es kann darüber hinaus gesagt werden, dass nach dem Überschreiten einer gewissen Drehzahl des Systems auch durch Erhöhen des einfließenden Drehmoments diese Drehzahl nicht mehr wesentlich erhöht werden kann. Denn die Geschwindigkeit des Systems ist in hohem Maße von dem Trägheitsmoment des schwingenden Systems aus Hemmungsrad und Hemmstück abhängig. Es besteht somit die Möglichkeit durch Variation des Ankerschwunggewichts die Regeldrehzahl verändern zu können.

Unter einer Bremsförderrolle wird eine Förderrolle mit einer Bremswirkung auf das geförderte Gut verstanden. Die Bremswirkung wird durch Ausübung eines Bremsmoments auf die Trommel erzeugt, wobei die Höhe des Bremsmoments von der Geschwindigkeit und/oder der Richtung des geförderten Gutes und damit von der Rotationsgeschwindigkeit des Rollenmantels abhängen kann. Vorzugsweise wird nur eine Bremskraft auf die Bremsförderrolle ausgeübt, wenn die zu transportierenden Transportgüter eine Geschwindigkeit erreichen, die höher ist als eine zuvor als maximal erwünschte Geschwindigkeit definierte Geschwindigkeit. Die Beschleunigung des Transportguts kommt beispielsweise aufgrund des Gefälles einer Rollenleiste oder einer Rollenbahn zustande.

Eine Rollenbahn ist eine aus mehreren Förderrollen, die sich über die gesamte Breite der Rollenbahn erstrecken, bestehende Transporteinrichtung zum Transport von Transportgütern, die z.B. ein Gefälle aufweisen kann, um mittels der Schwerkraft die Transportgüter zu beschleunigen. Rollenleisten weisen vorzugsweise kleinere Rollen als eine Rollenbahn auf. Der Transport der Transportgüter erfolgt üblicherweise mittels mehrer Rollenleisten, die seitlich voneinander beabstandet sein können.

Eine Bremsförderrolle wie oben beschrieben ist vorteilhaft, da sie kostengünstig und einfach mit wenigen Bauteilen realisiert werden kann. Eine Miniaturisierung, beispielsweise für den Einsatz als Bremsrolle einer Rollenleiste, ist problemlos möglich aufgrund der wenigen und leicht im kleinen Maßstab herstellbaren Teile. Dadurch, dass das Hemmungsrad fest mit der Trommeldrehachse verbunden ist, dreht es sich mit der gleichen Umdrehungszahl wie die Trommel. Das Hemmstück hemmt vorzugsweise das Hemmungsrad bei niedrigen Drehfrequenzen nicht. Erst wenn eine bestimmte maximale Drehfrequenz überschritten wird, steigt die Hemmung des Hemmungsrads durch das Hemmstück sprunghaft an. Es kann also eine maximale Drehfrequenz definiert werden, ab der in der Praxis eine starke Bremskraft auftritt, sodass diese maximale Drehfrequenz nicht überschritten wird. Die Drehfrequenz des Hemmungsrads stimmt mit der Drehfrequenz der Trommel überein, da sie fest miteinander verbunden sind. Also lässt sich durch die Begrenzung der Drehfrequenz des Hemmungsrads die Drehfrequenz der Trommel und damit die Geschwindigkeit des Transportguts begrenzen.

Nach Ausführungsformen der Erfindung lässt sich die maximale Drehfrequenz einstellen, indem die Eigenfrequenz des Hemmstücks eingestellt wird.

Nach Ausführungsformen der Erfindung befindet sich der Hemmregler neben der Förderrolle. Dies erleichtert die Wartung, den Austausch und den Einbau eines solchen Hemmreglers.

Nach Ausführungsformen der Erfindung ist das Hemmungsrad ein Zahnrad. Die Hemmung weist einen Anker mit zwei Ankervorsprüngen auf. Dabei ist der Anker um eine Ankerachse drehbar und die zwei Ankervorsprünge sind zum Eingreifen in Zahnzwischenräume des Zahnrads ausgebildet. Durch einen solchen Hemmmechanismus kann einfach eine maximale Drehfrequenz der Trommel und des Hemmungsrads definiert werden. Bei einer Drehfrequenz des Hemmungsrads unterhalb der maximalen Drehfrequenz hemmt der Anker die Drehung des Zahnrads nur unwesentlich. Die Trommel ist also quasi frei drehbar. Wenn nun die maximale Drehfrequenz erreicht wird, hemmt der Anker das Zahnrad dadurch, dass die Ankervorsprünge entgegen der Drehrichtung des Zahnrads gegen die Zahnradzähne schlagen. Die Größe des Ankers kann beispielsweise im Bereich zwischen 40° und 60° liegen.

Der Anker mit den zwei Ankervorsprüngen ist vorteilhaft, da durch die beidseitige Verzahnung des Ankers mit dem Zahnrad die Symmetrie des Bremsmechanismus erhöht wird. Durch die zwei Ankervorsprünge berührt das Zahnrad zweimal pro Schwingungsperiode den Anker.

Bei einer Drehung des Zahnrads setzen die Zähne den Anker in Schwingung, indem sie gegen die Ankervorsprünge drücken. Die maximale voreinstellbare Drehfrequenz des Zahnrads lässt sich mit der Eigenfrequenz des Ankers bestimmen. Wenn sich das Zahnrad genau um eine Zahneinteilung weiterbewegt in einer Schwingungsperiode des Ankers, ist die maximale Drehfrequenz erreicht. Falls das Zahnrad schneller gedreht wird, wird es durch die gegensätzlichen Bewegungen des Ankers gehemmt. Diese plötzlich auftretende Hemmung hat ein großes Drehmoment zur Folge, das das Zahnrad und damit auch die Trommel abbremst.

Nach Ausführungsformen der Erfindung weist der Anker Schwunggewichte auf. Durch die Wahl der Gewichte lässt sich die Eigenfrequenz des Ankers regulieren, wodurch die maximale Drehgeschwindigkeit der Trommel reguliert werden kann.

Nach Ausführungsformen der Erfindung weist die Trommel zumindest eine Aufnahme für zumindest einen Zylinderstift auf. Dieser zumindest eine Zylinderstift verbindet die Trommel mit dem Hemmungsrad. Durch den Zylinderstift wird also erreicht, dass sich das Hemmungsrad mit der gleichen Drehzahl dreht wie die Trommel.

Erfindungsgemäß weist der Hemmregler eine Aufnahme für eine Hemmreglerachse auf. Dabei ist der Hemmregler um die Hemmreglerachse drehbar gelagert und die Hemmreglerachse ragt in eine Aufnahme eines Lagerblocks hinein. Der Hemmregler ist frei drehbar um die Hemmreglerachse gelagert und über die Hemmreglerachse mit dem Lagerblock verbunden. Vorzugsweise bildet der Lagerblock den Abschluss der Bremsförderrolle an einem Ende der Bremsförderrolle.

Erfindungsgemäß weist der Lagerblock zumindest zwei weitere Zylinderstifte auf. Der Lagerblock ist dabei mit den zumindest zwei weiteren Zylinderstiften an eine Rollenleiste befestigbar. Die gesamte Bremsförderrolle kann somit über den Lagerblock an einer Rollenleiste befestigt werden. Vorzugsweise ist die Befestigungsweise der Bremsförderrolle baugleich zu der Befestigungsweise normaler Rollen der Rollenleiste, damit die Bremsförderrolle einfach und schnell in die Rollenleiste integriert werden kann und eine oder mehrere normale Rollen der Rollenleiste ersetzt.

Erfindungsgemäß weist der Hemmregler einen Pendelkörper auf. Der Abstand des Pendelkörpers von der Trommeldrehachse ist größer als der Radius der Trommel. Mit anderen Worten ist der Pendelkörper dazu ausgebildet, außerhalb eines Gehäuses der Bremsförderrolle zu pendeln. Der Pendelkörper pendelt im eingebauten Zustand der Bremsförderrolle unterhalb der Trommel.

Mit anderen Worten liegt der Pendelkörper außerhalb der Trommel. Dies ist vorteilhaft, da der Pendelkörper so für einen Benutzer leicht zu erreichen ist. Falls Gewichte an dem Pendelkörper angebracht werden sollen, ist dies leicht möglich. Ein feines Justieren der Eigenfrequenz des Pendelkörpers ist ebenfalls auf eine einfache Art und Weise für den Benutzer möglich, da er Gewichte leicht austauschen und hinzufügen oder entfernen kann.

Außerdem wird die Bremswirkung dadurch erhöht, dass der Abstand des Schwerpunkts des Pendelkörpers von der Trommeldrehachse im Vergleich zu einem Pendelkörper im Inneren der Trommel erheblich vergrößert ist. Mit dem Abstand des Pendelkörpers von der Drehachse steigt das Drehmoment des Pendels, wodurch sich die Bremswirkung erhöht.

Solche Ausführungsformen sind also vorteilhaft gegenüber dem Stand der Technik. Insbesondere sind solche Ausführungsformen vorteilhaft gegenüber der DE 1 967 660 U, da die Bremswirkung durch den größeren Pendelarm vergrößert wird und da der Pendelkörper leicht für einen Benutzer zu erreichen ist, um beispielsweise Gewichte zu tauschen, hinzuzufügen oder zu entfernen, um die Eigenfrequenz des Pendelkörpers zu justieren, und/oder um eine auf die Gegebenheiten angepasste Bremsleistung einzustellen. Mittels der Gewichte kann beispielsweise auch eingestellt werden, ab welcher Drehzahl der Bremsrolle die Bremsleistung einsetzen soll.

Ausführungsformen der Erfindung sind vorteilhaft, da eine Lagerung des Pendelkörpers außerhalb des Gehäuses der Bremsförderrolle eine einfachere Produktion erlaubt.

Nach Ausführungsformen der Erfindung weist der Pendelkörper Ausnehmungen zur Aufnahme von Gewichten auf. Mit den Gewichten kann der Hemmregler ausgewuchtet werden und die Eigenfrequenz des Hemmreglers eingestellt werden. Die Gewichte können also dazu benutzt werden, eine maximal mögliche Geschwindigkeit von Lagergütern einzustellen. Oberhalb dieser maximal möglichen Geschwindigkeit bremst der Hemmregler die Drehung der Bremsförderrolle so stark ab, dass eine weitere Beschleunigung verhindert wird. Somit wird eine konstante maximale Geschwindigkeit der Lagergüter erreicht.

Ausführungsformen der Erfindung sind besonders vorteilhaft, da bei einem außen liegenden Pendelkörper die Gewichte leicht eingesetzt und/oder ausgetauscht werden können, ohne dass das Gehäuse der Bremsförderrolle demontiert werden muss.

Nach Ausführungsformen der Erfindung wird die Trommel von einem Gummibelag umfasst. Dies ist vorteilhaft, da so die Reibung des zu befördernden Gutes erhöht wird und das Gut nicht über die Förderrolle rutscht, sondern eine Drehbewegung auslösen muss. Dadurch lässt sich die Geschwindigkeit des Stückgutes in Abhängigkeit von der Drehfrequenz der Trommel genau bestimmen, da so die Transportgeschwindigkeit des Gutes direkt von der Drehfrequenz der Trommel abhängt.

Nach Ausführungsformen der Erfindung ist der Lagerblock in einer Drehrichtung frei drehbar, sodass die Bremswirkung nur in einer Transportrichtung auftritt. Dies lässt sich beispielsweise durch Rasten erreichen, die die Zylinderstifte, mit denen der Lagerblock an einer Rollenleiste oder an einer Rollenbahn befestigt ist, nur in einer Drehrichtung fixieren. Falls eine Drehung in die entgegengesetzte Drehrichtung erfolgt, dreht sich der Lagerblock mit und eine Bremswirkung erfolgt nicht. Dies ist vorteilhaft, wenn eine Bremswirkung nur in Richtung von der Aufgabeseite der Durchlaufregals zur Entnahmeseite erwünscht ist aber nicht in der entgegengesetzten Richtung.

Nach Ausführungsformen der Erfindung erfolgt die Drehung des Zahnrads nur in einer Drehrichtung zusammen mit der Drehung der Trommel, sodass die Bremswirkung nur in einer Transportrichtung auftritt. Dies lässt sich beispielsweise durch Rasten erreichen, die den zumindest einen Zylinderstift, mit dem das Zahnrad mit der Trommel verbunden ist, nur in einer Drehrichtung fixieren. Falls eine Drehung in die entgegengesetzte Drehrichtung erfolgt, dreht sich das Zahnrad nicht mit und eine Bremswirkung erfolgt nicht. Dies ist vorteilhaft, wenn eine Bremswirkung nur in Richtung von der Aufgabeseite der Durchlaufregals zur Entnahmeseite erwünscht ist aber nicht in der entgegengesetzten Richtung.

Nach Ausführungsformen der Erfindung befindet sich der Hemmregler im Lagerblock. Dies erleichtert die Wartung, den Austausch und den Einbau eines solchen Hemmreglers.

In einem weiteren Aspekt betrifft die Erfindung eine Rollenbahn nach Anspruch 13 mit mehreren Förderrollen und zumindest einer Bremsförderrolle nach einer der vorhergehenden Ausführungsformen.

In noch einem weiteren Aspekt betrifft die Erfindung eine Rollenleiste nach Anspruch 15 mit mehreren Förderrollen und zumindest einer Bremsförderrolle nach einer der vorhergehenden Ausführungsformen.

In noch einem weiteren Aspekt betrifft die Erfindung eine Bremsförderrolle mit einer Trommel, einer Trommeldrehachse und einem Hemmregler, wobei der Hemmregler ein Hemmungsrad und ein Hemmstück aufweist, wobei das Hemmungsrad mit der Trommeldrehachse verbunden ist und zusammen mit der Trommel um die Trommeldrehachse drehbar ist, wobei der Hemmregler eine Aufnahme für eine Hemmreglerachse aufweist, wobei ein Lagerblock eine Aufnahme für die Hemmreglerachse aufweist, wobei der Hemmregler frei drehbar um die Hemmreglerachse mit dem Lagerblock verbunden ist, und wobei der Lagerblock in einer Drehrichtung frei drehbar ist, sodass die Bremswirkung nur in einer Transportrichtung auftritt.

In noch einem weiteren Aspekt betrifft die Erfindung eine Bremsförderrolle mit einer Trommel, einer Trommeldrehachse und einem Hemmregler, wobei der Hemmregler ein Hemmungsrad und ein Hemmstück aufweist, wobei das Hemmungsrad mit der Trommeldrehachse verbunden ist und zusammen mit der Trommel um die Trommeldrehachse drehbar ist, wobei die Drehung des Hemmungsads nur in einer Drehrichtung mit der Drehung der Trommel verbunden ist, sodass die Bremswirkung nur in einer Transportrichtung auftritt.

Im Folgenden werden die Merkmale der Erfindung anhand der Zeichnungen näher erläutert. Es zeigen:
- Figur 1: einen Ausschnitt einer Rollenleiste mit einer Bremsförderrolle und einer normalen Förderrolle;
- Figur 2: eine Bremsförderrolle mit Sicht auf die Trommeldrehachse;
- Figur 3: eine Bremsförderrolle mit Sicht auf die Trommeldrehachse und die Zylinderstifte des Lagerblocks;
- Figur 4: einen Hemmregler mit Hemmungsrad und Hemmstück im Inneren einer Bremsförderrolle;
- Figur 5: einen Querschnitt durch eine Bremsförderrolle mit einem Hemmregler;
- Figur 6: eine Explosionsdarstellung einer Bremsförderrolle mit Hemmregler;
- Figur 7: schematische Darstellungen verschiedener Hemmungsrad- und Hemmstückstellungen;
- Figur 8: eine schematische Darstellung mehrerer Rollenleisten in einem Rollenleistenregalfach;
- Figur 9: eine schematische Darstellung eines Ausschnitts einer Rollenleiste;
- Figur 10: eine schematische Darstellung eines Rollenbahnregals;
- Figur 11: ein Diagramm, das den Zusammenhang zwischen dem auftretenden Bremsdrehmoment und der Drehzahl der Bremsförderrolle zeigt;
- Figur 12: eine schematische Darstellung einer Bremsförderrolle mit einem außen liegenden Anker;
- Figur 13: eine schematische Ansicht einer Bremsförderrolle nach Ausführungsformen der Erfindung; und
- Figur 14: eine schematische Ansicht einer Bremsförderrolle nach Ausführungsformen der Erfindung.

Im Folgenden sind einander ähnliche Elemente mit denselben Bezugszeichen gekennzeichnet.

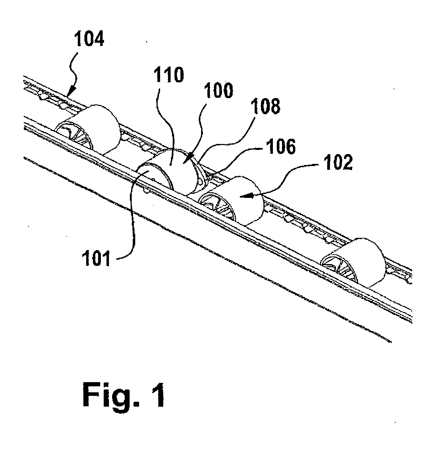

Figur 1 zeigt eine Bremsförderrolle 100 mit einer Trommel 101 und eine Förderrolle 102 in einem Rollenleistenprofil 104. Die Förderrolle 102 ist eine aus dem Stand der Technik bekannte Förderrolle und mit ihrer Drehachse am Rollenleistenprofil 104 befestigt. Die Bremsförderrolle 100 weist an beiden seitlichen Enden Endstücke der Trommeldrehachse auf, die analog zu der Befestigung der Förderrolle 102 an dem Rollenleistenprofil 104 befestigt werden. Zusätzlich weist die Bremsförderrolle 100 an einer Seite zwei Zylinderstifte 106 auf, wovon nur einer in Figur 1 sichtbar ist. Die beiden Zylinderstifte 106 befestigen den Lagerblock 108 der Bremsförderrolle 100 am Rollenleistenprofil 104. Der Lagerblock 108 dient zur Halterung des Hemmreglers innerhalb der Bremsförderrolle 100. Außerdem ist die Trommel 101 mit einer Gummischicht 110 beschichtet, wodurch der Reibungskoeffizient zwischen der Bremsförderrolle und einem beförderten Transportgut erhöht wird, sodass das Transportgut nicht über die Bremsförderrolle 100 rutscht, sondern die Bremsförderrolle 100 in Drehung versetzt.

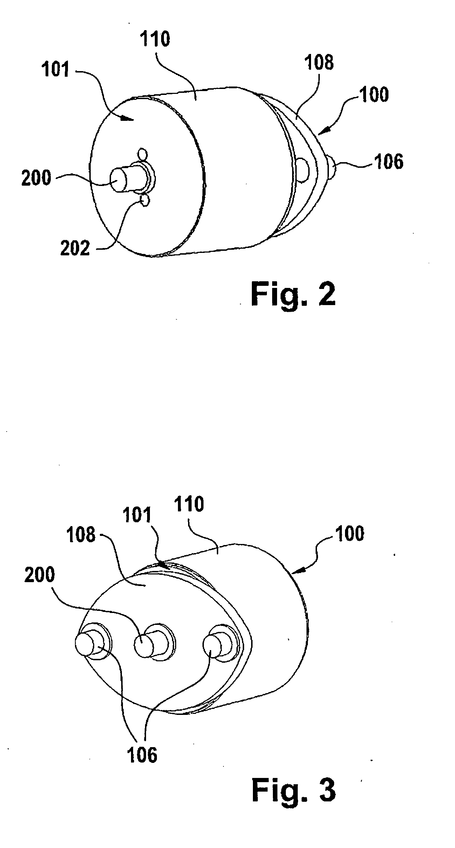

Figur 2 zeigt eine Bremsförderrolle 100 mit einem Lagerblock 108, einer Gummischicht 110, einem Zylinderstift 106 am Lagerblock 108 und einer Trommel 101 mit einer Trommeldrehachse 200. Der Zylinderstift 106 dient zur Befestigung des Lagerblocks 108 an einem Rollenleistenprofil. Der Lagerblock 108 wiederum dient als Befestigung für den Hemmregler im Inneren der Bremsförderrolle (in Figur 2 nicht dargestellt). Auf der Seite ohne Lagerblock wird die Bremsförderrolle 100 mit Hilfe der Trommeldrehachse 200 an einer Rollenleiste befestigt. Die Trommel 101 mit der Gummischicht 110 ist um die Trommeldrehachse 200 drehbar.

Außerdem weist die Bremsförderrolle 100 einen Zylinderstift 202 auf, der das Hemmungsrad im Inneren (in Figur 2 nicht zu sehen) mit der Trommel 101 fest verbindet, sodass bei einer Drehung der Trommel 101 auch das Hemmungsrad mitgedreht wird.

Figur 3 zeigt eine weitere Ansicht einer Bremsförderrolle 100 mit einer Gummischicht 110 auf der Trommel 101, einem Lagerblock 108 mit Zylinderstiften 106 für die Befestigung des Hemmreglers und einer Trommeldrehachse 200. In Figur 3 sind im Gegensatz zu Figur 2 beide Zylinderstifte des Lagerblocks zu sehen. Die Bremsförderrolle 100 wird mit den Zylinderstiften 106 und der Trommeldrehachse 200 in einer Rollenleiste befestigt. Die Trommel 101 ist dann frei um die Trommeldrehachse 200 drehbar und der Hemmregler ist über die Zylinderstifte 106 befestigt.

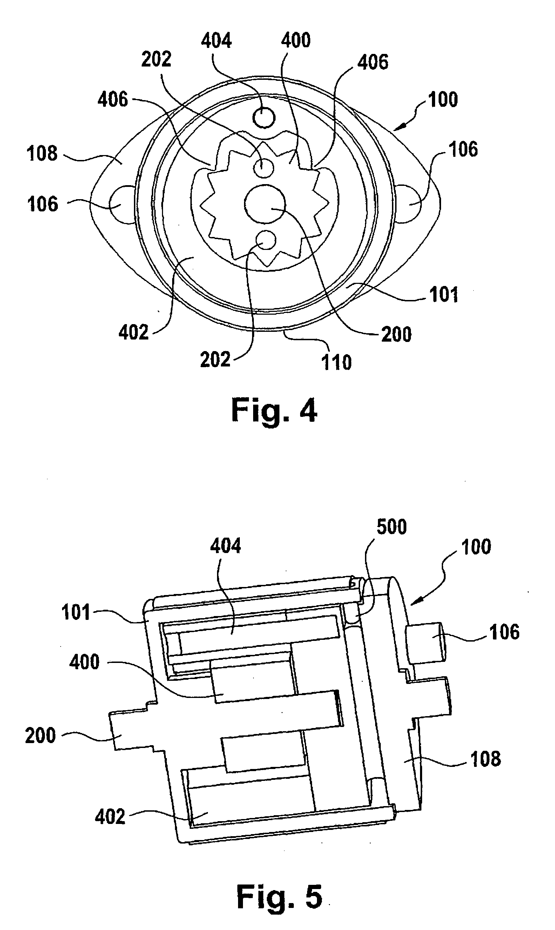

Figur 4 zeigt einen Querschnitt durch eine Bremsförderrolle 100. Der Lagerblock 108 kann mit Zylinderstiften 106 beispielsweise an einer Rollenleiste oder an einer Rollenbahn befestigt werden. Die Trommel 101 weist im Inneren eine Aussparung für den Hemmregler auf. Der Hemmregler besteht aus einem Hemmungsrad in Form eines Zahnrads 400 mit einem Hemmstück in Form eines Ankers 402. Der Anker 402 ist mit einem Zylinderstift 404 mit dem Lagerblock 108 verbunden und frei in dem Zylinderstift 404 drehbar. Das Zahnrad 400 ist mit zwei Zylinderstiften 202 mit der Trommel 101 verbunden, sodass eine Drehung der Trommel 101 auch eine Drehung des Zahnrads 400 zur Folge hat. Die Drehung des Zahnrads 400 und die Drehung der Trommel 101 erfolgt dabei um die Trommeldrehachse 200.

Wenn nun also ein Transportgut über die Bremsförderrolle 100 befördert wird, setzt das Transportgut aufgrund der Haftreibung mit der Gummischicht 110 die Trommel 101 in Drehung, wodurch auch das Zahnrad 400 in Drehung um die Trommeldrehachse 200 versetzt wird. Der Anker 402 weist zwei Ankervorsprünge 406 auf, die eine Bewegung des Ankers 402 im Falle einer Drehung des Zahnrads 400 auslösen. Die Bewegung des Ankers 402 kommt dadurch zustande, dass die Zähne des Zahnrads 400 gegen die Ankervorsprünge 406 drücken und somit den Anker 402 um die Ankerdrehachse in Form des Zylinderstifts 404 in Bewegung versetzen. Bei einer langsamen Drehung des Zahnrads 400, was einer langsamen Drehung der Trommel 101 entspricht, beeinträchtigen die Ankervorsprünge 406 die Bewegung des Zahnrads 400 kaum. Die geringfügige Abbremsung des Zahnrads 400 durch die Ankervorsprünge 406 ist in der Praxis vernachlässigbar klein.

Wenn nun jedoch das Zahnrad so schnell gedreht wird, dass innerhalb einer Schwingungsdauer des Ankers das Zahnrad sich um mehr als eine Zahneinteilung weiter dreht, schlägt der Ankervorsprung 406 gegen den nächsten Zahn des Zahnrads 400 und bremst somit das Zahnrad erheblich ab. Da die Drehung der Trommel 101 mit der gleichen Drehfrequenz erfolgt wie die Drehung des Zahnrads 400, wird dadurch auch die Trommel 101 abgebremst. Durch die Eigenfrequenz des Ankers 402 lässt sich also eine maximale Drehfrequenz der Trommel 101 einstellen. Sollte ein Stückgut mit einer größeren als der als maximal definierten Geschwindigkeit, die direkt mit der Drehfrequenz zusammenhängt, über die Bremsförderrolle befördert werden, bremst die Förderrolle durch den Hemmmechanismus das Fördergut ab. Dadurch, dass die Trommel 101 eine Gummischicht 110 aufweist, wird ein Rutschen des Fördergutes über die Bremsförderrolle hinweg verhindert. Das Fördergut kann also nur so schnell befördert werden, wie es durch die begrenzte Drehzahl der Trommel 101 erlaubt wird. Fördergüter mit geringerer Geschwindigkeit werden durch die Bremsförderrolle 100 nicht gebremst. Der Vorteil ist also, dass Fördergüter unabhängig von ihrem Gewicht nur in Abhängigkeit von ihrer Geschwindigkeit automatisch abgebremst werden und unterhalb einer bestimmten kritischen Geschwindigkeit frei über die Bremsförderrolle hinweg befördert werden. Es können also Fördergüter stark unterschiedlichen Gewichts - z.B. von 500g bis 50kg - über die gleiche Rollenleiste oder Rollenbahn befördert werden, ohne dass durch die für den Transport der leichten Transportgüter notwendige Neigung der Rollenleiste oder Rollenbahn die schweren Güter zu schnell werden und beispielsweise der Inhalt beschädigt wird.

Der Anker 402 wird nur durch die kleinen schrägen Stirnflächen der Ankervorsprünge 406 nach oben hin bewegt. Die Ankervorsprünge 406 sind so ausgebildet, dass während der Schwingung kein Kontakt besteht. Das Zahnrad 400 befindet also während der freien Schwingung des Ankers 402 in Ruhe und beeinflusst den Anker 402 nur insofern, als die Schwingung des Ankers 402 durch die Reibung gebremst wird, solange die Drehfrequenz des Zahnrads 400 nicht die maximal erwünschte Drehfrequenz übersteigt.

Figur 5 zeigt einen Querschnitt längs der Trommeldrehachse 200 einer Bremsförderrolle 100. Das Zahnrad 400 und die Trommel 101 sind um die Trommeldrehachse 200 drehbar. Der Anker 402 ist über den Zylinderstift 404 mit dem Lagerblock 108 verbunden und um den Zylinderstift 404 drehbar. Der Lagerblock 108 weist einen Zylinderstift 106 auf, mit dem die Bremsförderrolle an einer Rollenleiste oder einer Rollenbahn befestigt werden kann.

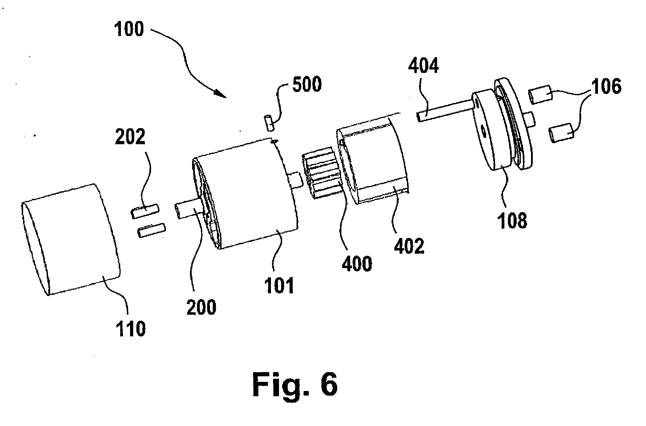

Figur 6 zeigt eine Explosionsdarstellung einer Bremsförderrolle 100. Die Bremsförderrolle 100 besteht aus einer Trommel 101, einem Gummibelag 110, einem Lagerblock 108 mit Zylinderstiften 106, einem Zahnrad 400, das mit Zylinderstiften 202 mit der Trommel 101 verbunden wird, und einem Anker 402, der mit einem Zylinderstift 404 mit dem Lagerblock 108 verbunden wird. Das Zahnrad 400 ist also fest mit der Trommel 101 verbunden und um die Trommeldrehachse 200 drehbar. Der Anker 402 ist um den Zylinderstift 404 drehbar gelagert und wird bei einer Bewegung der Trommel 101 durch die damit verbundene Bewegung des Zahnrads 400 in Schwingung versetzt. Bei einer zu schnellen Drehung des Zahnrads 400 bremst der Anker 402 die Bewegung des Zahnrads und damit auch die Bewegung der Trommel 101 ab.

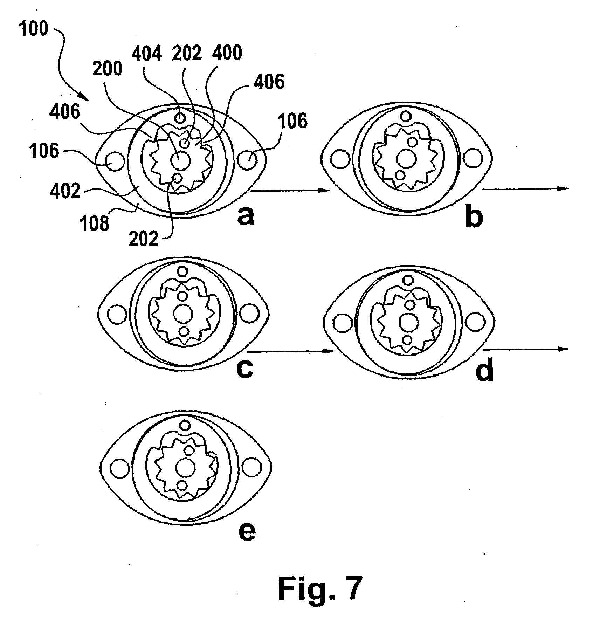

Figur 7 zeigt die Bewegung des Zahnrads 400 und die Bewegung des Ankers 402. Die Bewegungen werden durch fünf verschiedene Abbildungen Fig. 7a-e, die zeitlich aufeinander folgen, dargestellt. Bezugszeichen sind aus Übersichtlichkeitsgründen nur in der ersten Abbildung eingezeichnet. Jede Abbildung zeigt einen Querschnitt durch eine Bremsförderrolle 100 mit einem Hemmregler, bestehend aus einem Anker 402 mit Ankervorsprüngen 406 und einem Zahnrad 400. Das Zahnrad 400 ist mit Zylinderstiften 202 mit der Trommel 101 verbunden. Durch eine Drehung der Trommel wird auch das Zahnrad 200 in Drehung versetzt und drückt mit den Zähnen gegen die Ankervorsprünge 406. Dadurch wird der Anker 402 in Schwingung versetzt.

In Figur 7a-e dreht sich das Zahnrad im Uhrzeigersinn und drückt in Fig. 7a gegen den rechten Ankervorsprung 406; in Fig. 7b hat sich das Zahnrad 400 etwas weiter im Uhrzeigersinn gedreht und lenkt den Anker 402 maximal aus. In Fig. 7c hat sich das Zahnrad 400 wiederum im Uhrzeigersinn weitergedreht, während der Anker 402 zurückpendelt. Der linke Ankervorsprung 406 wird dabei vom Zahnrad 400 nach links gedrückt. Sollte die Bewegung des Zahnrads zu schnell erfolgen, wird an dieser Stelle das Zahnrad vom linken Ankervorsprung 406 gehemmt, da der Ankervorsprung eine Weiterdrehung des Zahnrads nur unter einem größeren Kraftaufwand erlaubt. In Fig. 7d lenkt das Zahnrad 400 den Anker 402 maximal nach links aus, indem es mit einem Zahn gegen den linken Ankervorsprung 406 drückt. In Fig. 7e schwingt der Anker von sich aus zurück und bremst die Bewegung des Zahnrads nur dann nicht ab, wenn sich das Zahnrad 400 hinreichend langsam bewegt, um nicht gegen den rechten Ankervorsprung 406 anzuschlagen.

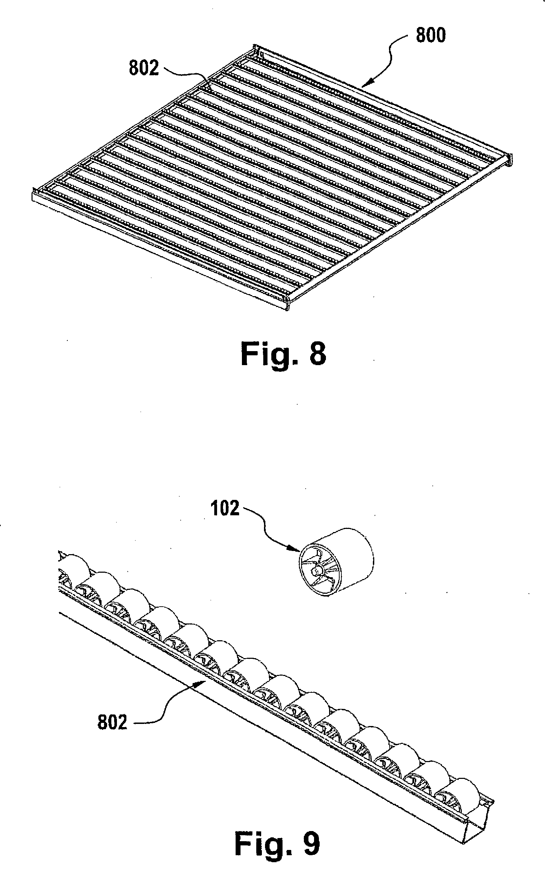

Figur 8 zeigt eine schematische Ansicht eines Rollenleistenregalfachs 800. In den Rollenleisten 802 sind regelmäßig Bremsförderrollen wie oben beschrieben angeordnet, sodass ein befördertes Transportgut eine bestimmte maximale Geschwindigkeit nicht überschreiten kann. Die bestimmte maximale Geschwindigkeit entspricht dabei der Geschwindigkeit des Transportguts, mit der es über die Rollenleiste befördert wird, die direkt mit der Drehfrequenz der Rollen der Rollenleiste zusammenhängt.

Wenn beispielsweise die maximale Geschwindigkeit des Förderguts 0,25m/s betragen soll und die Bremsrolle einen Außendurchmesser 26mm aufweist, ergibt sich aus folgender Betrachtung die maximale Drehzahl, die die Rolle erreichen darf. Ein Außendurchmesser von 26mm entspricht einem Umfang von 81,681mm. Hieraus ergibt sich eine maximale Drehzahl der Trommel und des Zahnrads von 183,641 Umdrehungen pro Minute, also ca. 3 Hz. Die Eigenfrequenz des Ankers muss nun so eingestellt werden, dass der Anker ab einer Drehfrequenz des Zahnrads von 3 Hz das Zahnrad bremst. Hierzu muss die Anzahl der Zähne des Zahnrads berücksichtigt werden. Das Zahnrad darf sich innerhalb einer Schwingungsdauer des Ankers maximal um eine Zahneinteilung drehen. Wenn das Zahnrad beispielsweise 12 Zähne hat, dreht sich das Zahnrad in 1/36s um einen Zahn weiter. Die Eigenfrequenz des Ankers muss also in diesem Fall auf 36Hz eingestellt werden. Dies kann beispielsweise durch eine geeignete Werkstoffwahl oder durch das Anbringen von Gewichten geschehen.

Figur 9 ist eine schematische Darstellung eines Ausschnitts einer Rollenleiste 802 mit einer Vielzahl von Förderrollen 102. Eine oben beschriebene Bremsförderrolle lässt sich leicht in die Rollenleiste 802 einsetzen, da der gleiche Befestigungsmechanismus verwendet wird und so einfach eine oder mehrere Förderrollen 102 durch eine Bremsförderrolle ersetzt werden können.

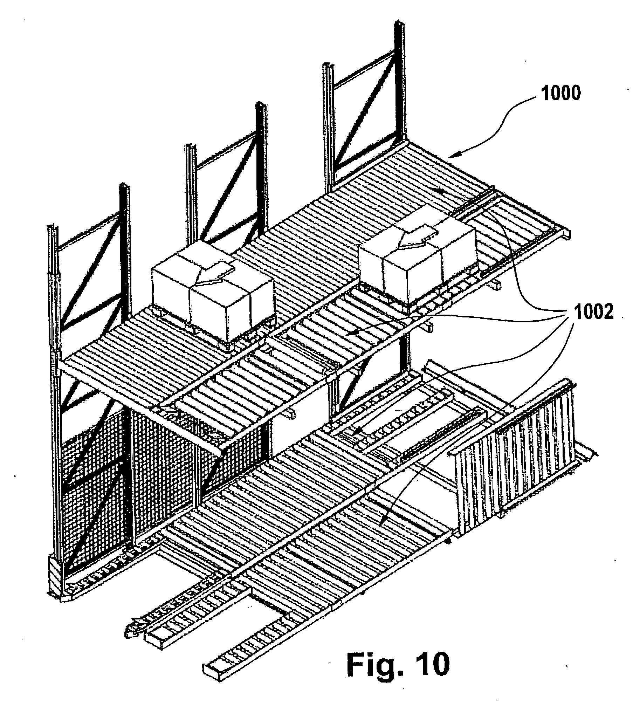

Figur 10 zeigt ein Rollenbahnregal 1000 mit mehreren Rollenbahnen 1002. In die Rollenbahnen 1002 können leicht Bremsförderrollen 100 integriert werden, da sie auf die gleiche Art und Weise befestigt werden, wie die herkömmlichen Förderrollen. So kann auch hier die Geschwindigkeit zu transportierender Transportgüter kontrolliert werden über die Drehfrequenz der Bremsförderrollen.

Eine Rollenbahn unterscheidet sich von einer Rollenleiste durch die Größe der Rollen. Die Rollen einer Rollenbahn weisen einen größeren Durchmesser als die einer Rollenleiste auf. Außerdem sind die Rollen einer Rollenbahn bevorzugterweise länger als die Rollen einer Rollenleiste.

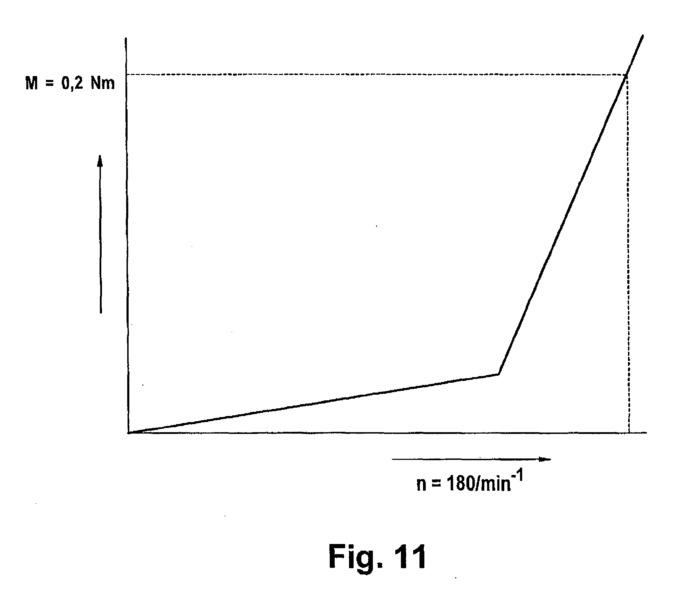

Figur 11 ist ein Diagramm, das den Zusammenhang zwischen dem auftretenden Bremsdrehmoment und der Drehzahl der Bremsförderrolle zeigt. Auf der x-Achse ist die Bremsförderrollendrehzahl n aufgetragen und auf der y-Achse das Bremsdrehmoment M. Wie oben beschrieben wird als Beispiel eine Geschwindigkeit des Transportgutes von 0,25m/s gewünscht, was eine maximal erwünschte Drehfrequenz von 3Hz zur Folge hat, was wiederum einer Drehzahl n von 180 Umdrehungen pro Minute entspricht. In Figur 11 tritt bei n=180 min⁻¹ ein Drehmoment von M=0,2Nm auf. Dieses Drehmoment reicht bei einem Gleitreibewert zwischen Transportgut und Bremsförderrolle von µ=0,2, einem Gefälle der Rollenleiste oder der Rollenbahn von α=3,5° und einem Durchmesser der Trommelachse von 4mm aus, um eine Masse von 50kg abzubremsen. Für kleinere Massen reicht ein dementsprechend niedrigeres Drehmoment. Sobald die Rollendrehzahl aufgrund der Bremswirkung fällt, nimmt auch das bremsende Drehmoment ab, sodass das beförderte Transportgut nicht bis zum Stillstand abgebremst wird, egal wie groß seine Masse ist.

Dadurch, dass - wie in Figur 11 zu sehen - das bremsende Drehmoment lange vernachlässigbar klein ist und erst ab einer Drehzahl nahe der maximal erwünschten Drehzahl von 180 min⁻¹ stark ansteigt, werden sowohl kleine als auch große Maßen bei ähnlichen Geschwindigkeiten abgebremst. Es lassen sich als in einem Regalfach Transportgüter stark unterschiedlicher Massen lagern und transportieren, ohne dass Umbauten notwendig werden.

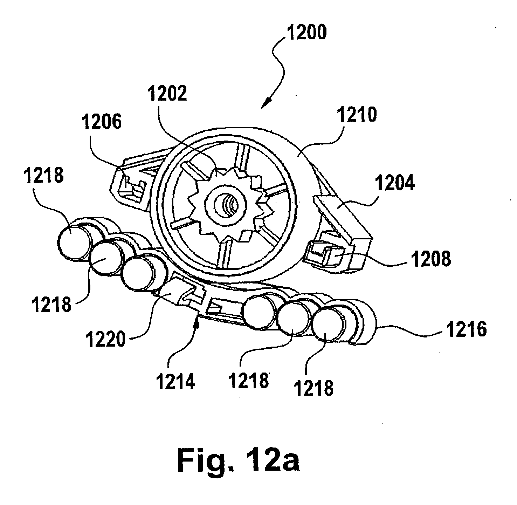

Figur 12a ist eine schematische Darstellung einer Bremsförderrolle 1200. Die Bremsförderrolle 1200 ist in Figur 12a noch nicht komplett montiert. Im montierten Zustand ist das Zahnrad 1202 nicht zu sehen, da es von einem Abdeckungsteil (in Figur 12a nicht dargestellt) verdeckt wird. In Figur 12a ist lediglich ein erstes Abdeckungsteil 1204 montiert. Unter dem Abdeckungsteil 1204 befindet sich ebenfalls auf der anderen Seite der gegenüberliegenden Seite der Bremsförderrolle ein zweites Zahnrad, das Baugleich zu dem ersten Zahnrad 1202 ist. Das zweite Zahnrad ist in Figur 12a nicht erkennbar. Das Abdeckungsteil 1204 umfasst eine Ausnehmung 1206 und eine Schiene 1208. Die Ausnehmung 1206 ist zur Aufnahme einer Schiene eines zweiten, nicht dargestellten Abdeckungsteils ausgebildet. Die Schiene 1208 ist zum Einführen in eine Ausnehmung eines nicht dargestellten zweiten Abdeckungsteils ausgebildet. Das zweite Abdeckungsteil ist also baugleich zum ersten Abdeckungsteil 1204 ausgebildet. Bei der Montage wird die Schiene 1208 des ersten Abdeckungsteils 1204 in die Ausnehmung des zweiten Abdeckungsteils eingeführt und die Schiene des zweiten Abdeckungsteils in die Ausnehmung 1206 des ersten Abdeckungsteils.

Außerdem weist die Bremsförderrolle 1200 eine Lauffläche 1210 auf. Die Lauffläche 1210 besteht aus einem Kunststoff mit einem hohen Reibkoeffizienten für die zu transportierenden Lager- und Transportgüter. Zum Beispiel kann die Lauffläche 1210 aus thermoplastischen Elastomeren (TPE) bestehen. Die Lauffläche 1210 kann zusammen mit dem inneren Bereich 1212 der Bremsförderrolle 1200 im 2-Komponenten-Spritzgussverfahren hergestellt werden. Der innere Bereich 1212 umfasst das erste Zahnrad 1202 und das nicht dargestellte, auf der gegenüberliegenden Seite der Bremsförderrolle 1200 liegende zweite Zahnrad.

Unterhalb der Bremsförderrolle befindet sich ein Pendelkörper 1214. Der Pendelkörper 1214 umfasst ein erstes Pendelkörperteil 1216 und ein zweites Pendelkörperteil (nicht dargestellt). Außerdem umfasst der Pendelkörper 1214 Gewichte 1218. Die Gewichte 1218 dienen zum Einstellen der gewünschten Schwingungsfrequenz des Pendelkörpers 1216. Die Gewichte 1218 können beispielsweise Stahlstifte sein, die in Ausnehmungen des ersten Pendelkörpers 1216 eingelegt sind.

Das Pendelkörperteil 1216 umfasst außerdem eine Lasche 1220. Die Lasche 1220 ist dazu ausgebildet, in eine Ausnehmung eines zweiten, nicht dargestellten Pendelkörperteils einzugreifen. Außerdem umfasst das Pendelkörperteil 1216 eine Ausnehmung für eine ebensolche Lasche, sodass eine ebenso ausgebildete Lasche eines zweites Pendelkörperteils in die Ausnehmung des ersten Pendelkörperteils 1216 eingreifen kann. Das Pendelkörperteil 1214 besteht also aus einem ersten Pendelkörperteil 1216 und einem zweiten Pendelkörperteil (nicht dargestellt in Figur 12a), die über jeweils eine Lasche und eine Ausnehmung miteinander verbunden sind.

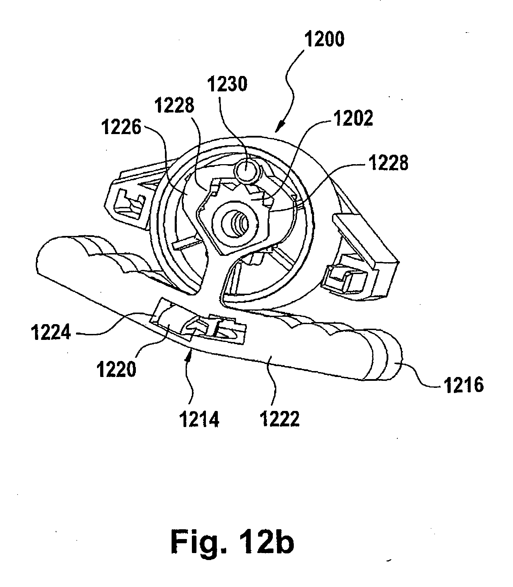

Figur 12b ist eine schematische Darstellung einer Bremsförderrolle 1200. Im Vergleich zu Figur 12a wurde das zweite Pendelkörperteil 1222 mit dem ersten Pendelkörperteil 1216 mit Hilfe der Lasche 1220 des Pendelkörperteils 1216 und der Ausnehmung 1224 des Pendelkörperteils 1222 verbunden. Dies kann zum Beispiel mittels einer Schnappverbindung erfolgen. Das Pendelkörperteil 1216 und das Pendelkörperteil 1222 bilden somit einen Pendelkörper. Nicht erkennbar in Figur 12b ist eine weitere Verbindung zwischen dem Pendelkörperteil 1216 und dem Pendelkörperteil 1222 an der gegenüberliegenden Seite der Bremsförderrolle 1200. Die dortige Verbindung wird durch eine Lasche des Pendelkörperteils 1222, die in eine Ausnehmung des Pendelkörperteils 1216 eingreift, hergestellt. Dies kann zum Beispiel ebenfalls über eine Schnappverbindung erfolgen.

Das Pendelkörperteil 1222 weist außerdem einen Anker 1226 auf. Der Anker 1226 weist außerdem zwei Ankervorsprünge 1228 auf. Die Ankervorsprünge 1228 sind zum Eingreifen in Zähne des Zahnrads 1202 ausgebildet. Das Pendelkörperteil 1216 umfasst ebenfalls einen solchen Anker mit solchen Ankervorsprüngen (in Figur 12b nicht ersichtlich). Bei einer Drehung Zahnrades 1202, die automatisch bei Transport eines Transport- oder Lagerguts erfolgt, wird also der Pendelkörper 1214 durch die Ankervorsprünge 1228 ausgelenkt. Mit den Gewichten im Pendelkörper 1214 lässt sich eine gewünschte Frequenz einstellen, ab der der Pendelkörper 1214 die Drehung der Bremsförderrolle 1200 erheblich abbremst. Mit den Gewichten im Pendelkörper 1214 lässt sich also die Eigenfrequenz des Pendelkörpers 1214 einstellen. Der Pendelkörper 1214 pendelt um die Pendelachse, die durch einen Zylinderstift 1230 definiert ist.

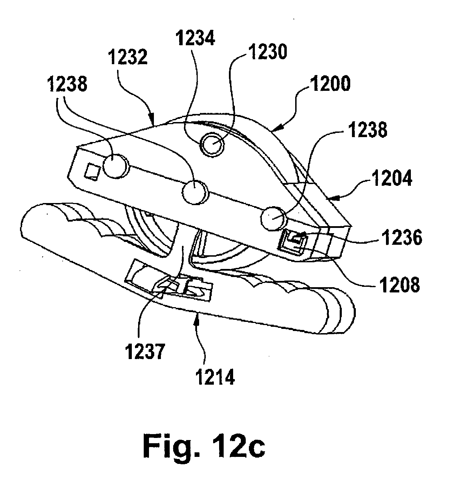

Figur 12c ist eine schematische Ansicht einer Bremsförderrolle 1200 im fertig montierten Zustand. Im Vergleich zu Figur 12b ist das zweite Abdeckungsteil 1232 hinzugefügt worden. Das zweite Abdeckungsteil 1232 umfasst eine erste Ausnehmung 1234 für den Zylinderstift 1230. Der Zylinderstift 1230 wird so in der Ausnehmung 1234 des Abdeckungsteils 1232 fixiert. Das Abdeckungsteil 1232 weist eine Schiene auf, die in die Ausnehmung 1206 des ersten Abdeckungsteils 1204 eingreift (in Figur 12c nicht ersichtlich). Außerdem weist das zweite Abdeckungsteil 1232 eine Ausnehmung 1236 für die Schiene 1208 des ersten Abdeckungsteils 1204 auf. Die Schiene 1208 greift also in die Ausnehmung 1236 und verbindet so das erste Abdeckungsteil 1204 mit dem zweiten Abdeckungsteil 1232.

Das erste Abdeckungsteil 1204 und das zweite Abdeckungsteil 1232 bilden zusammen eine Abdeckung für die Bremsförderrolle. Die so gebildete Abdeckung schützt das in Figur 12c von der Abdeckung verdeckte Zahnrad und den ebenfalls von der Abdeckung verdeckten Anker vor Verschmutzungen aus der Umgebung und/oder vom Lager- oder Transportgut.

Zwischen dem Pendelkörper 1214 und dem Anker (in Figur 12c nicht erkennbar) befindet sich ein Verbindungssteg 1237. Vorzugsweise ist der Verbindungssteg 1237 so dünn ausgebildet, dass der Verbindungssteg beim Betrieb der Bremsförderrolle 1200 an den Umkehrpunkten der Schwingungsbewegung des Pendelkörpers 1214 verbogen wird. Der Pendelkörper 1214 schwingt also noch eine kurze Zeit weiter, wenn der Anker schon durch das Zahnrad abgebremst wurde.

Mit anderen Worten überschwingt der Pendelkörper 1214. Dadurch wird die Schwingungsperiode verlängert und eine größere Bremswirkung erzielt. Eine Verlängerung der Schwingungsperiode bedeutet gleichzeitig auch eine Absenkung der Eigenfrequenz. Die Bremswirkung tritt demnach bereits früher, bei einer niedrigeren Transportgutgeschwindigkeit, ein. Durch das Überschwingen wird also auch die Eigenfrequenz verändert.

Außerdem weist das zweite Abdeckungsteil drei Halterungsstifte 1238 auf. Die Halterungsstifte 1238 sind dazu ausgebildet, um die Bremsförderrolle 1200 in einer Rollenleiste zu fixieren. Die Halterungsstifte werden also in einer Rollenleiste in die Ausnehmungen der Rollenleiste eingeführt, die zur Lagerung der Rollen ausgebildet sind. Auch das erste Abdeckungsteil 1204 weist solche Halterungsstifte und eine Ausnehmung für einen Zylinderstift auf der gegenüberliegenden Seite der Bremsförderrolle 1200 auf (in Figur 12c nicht ersichtlich).

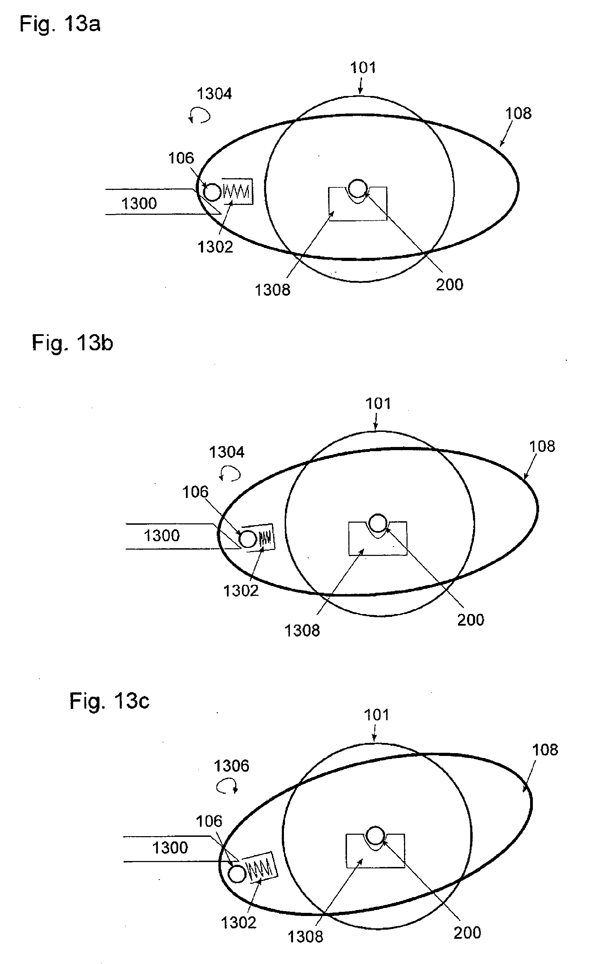

Figur 13a zeigt eine schematische Ansicht einer Bremsförderrolle mit einem Bremsmechanismus nach Ausführungsformen der Erfindung. Das Hemmungsrad (hier nicht dargestellt) ist mit der Trommeldrehachse 200 verbunden. Außerdem ist der Lagerblock 108 mit der Trommeldrehachse 200 verbunden. Die Trommeldrehachse 200 liegt in einer muldenförmigen Halterung 1308, die fest mit der Rollenleiste verbunden ist. Die Halterung 1308 ist an der Rollenleiste befestigt. Der Lagerblock 108 weist außerdem einen Zylinderstift 106 auf, über den der Hemmregler mit dem Lagerblock verbunden ist. Außerdem weist der Lagerblock 108 ein Rückstellelement 1302 auf. Eine abgeschrägte Halterung 1300 ist an der Rollenleiste befestigt. Wenn nun die Trommel 101 durch den Transport eines Transportgutes in der Drehrichtung 1304, das heißt entgegen dem Uhrzeigersinn, gedreht wird, dreht sich ebenfalls der Lagerblock 108 mit, da der Zylinderstift 106 durch die abgeschrägte Halterung 1300 gegen die Kraft des Rückstellelements 1302 - wie in Figur 13b gezeigt - nach innen gedrückt wird und eine Drehung des Lagerblocks 108 ermöglicht.

Sowohl der Lagerblock als auch das Hemmrad und der Hemmregler drehen sich in diesem Fall entgegen dem Uhrzeigersinn in Drehrichtung 1304. Das Hemmungsrad und der Hemmregler drehen sich also in die gleiche Richtung. In diesem Falle entsteht keine Bremswirkung.

Figur 13c ist die schematische Ansicht einer Bremsförderrolle nach Ausführungsformen der Erfindung, wenn sie in der Drehrichtung 1306, das heißt im Uhrzeigersinn, gedreht wird. In diesem Falle drückt der Zylinderstift 106 von unten gegen die abgeschrägte Halterung 1300. Aufgrund der Form der abgeschrägten Halterung 1300 wird der Zylinderstift 106 nicht gegen das Rückstellelement 1302 gedrückt. Das Rückstellelement 1302 stellt durch seine Rückstellkraft sicher, dass der Zylinderstift 106 unterhalb der abgeschrägten Halterung 1300 bleibt und so eine Drehung des Lagerblocks 108 verhindert. Wenn also die Trommel 101 durch den Transport eines Transportgutes in der Drehrichtung 1306, also im Uhrzeigersinn, gedreht wird, dreht sich der Lagerblock 108 nicht mit. Dadurch, dass der Hemmregler über den Zylinderstift 106 mit dem Lagerblock 108 verbunden ist, dreht sich in diesem Falle auch der Hemmregler nicht mit. Das Hemmungsrad jedoch ist mit der Trommeldrehachse 200 verbunden und dreht sich daher mit. Bei einer Drehung in der Drehrichtung 1306 entsteht also ein Bremsmoment, da sich das Hemmungsrad in Drehrichtung 1306 bewegt, wohingegen sich der Hemmregler nicht bewegt.

Figur 13a-c zeigt also eine Bremsförderrolle, bei der Lagerblock in einer Drehrichtung 1304 frei drehbar ist, sodass die Bremswirkung nur bei Drehung in der anderen Drehrichtung 1306 auftritt. Es tritt also nur eine Bremswirkung in einer Transportrichtung auf und nicht in der entgegengesetzten Richtung.

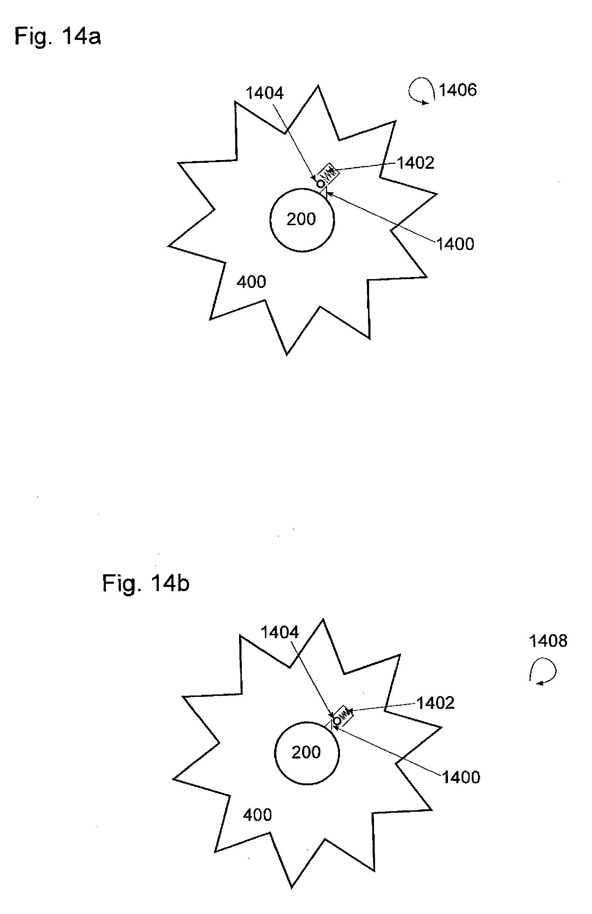

Figur 14a zeigt schematisch eine weitere Ausführungsform der Erfindung. Die Trommeldrehachse 200 weist einen Vorsprung 1400 auf. Der Vorsprung 1400 ist dreiecksförmig. Das Hemmungsrad 400 weist ein Mitnahmeelement 1404 auf, das durch ein Rückstellelement 1402 in Richtung der Trommeldrehachse 200 gedrückt wird. Bei einer Drehung der Trommeldrehachse 200 in Drehrichtung 1406 drückt der Vorsprung 1400 gegen das Mitnahmeelement 1404 und nimmt so das gesamte Hemmungsrad 400 mit. Eine Drehung der Trommeldrehachse in Drehrichtung 1406 hat also die Drehung des Hemmungsrads 400 ebenfalls in der Richtung 1406 zufolge. Durch das Rückstellelement 1402 wird sichergestellt, dass der Vorsprung 1400 das Mitnahmeelement 1404 nicht von der Trommeldrehachse wegdrückt.

Figur 14b zeigt das Hemmungsrad 400 und die Trommeldrehachse 200 aus Figur 14a mit dem Unterschied, dass die Trommeldrehachse 200 in Drehrichtung 1408, also im Uhrzeigersinn, gedreht wird. In diesem Falle drückt der Vorsprung 1400 mit einer abgeschrägten Fläche das Mitnahmeelement 1404 gegen die Kraft des Rückstellelements 1402 von der Trommeldrehachse 200 weg. Das Mitnahmeelement 1404 wird also nicht durch den Vorsprung 1400 bewegt. Somit resultiert aus einer Drehung in Drehrichtung 1408 der Trommeldrehachse 200 keine Drehung des Hemmungsrads 400. Mit anderen Worten ist die Drehung des Hemmungsrads 400 nur in einer Drehrichtung 1406 mit der Drehrichtung der Trommeldrehachse 200 verbunden. Falls eine Drehung in Drehrichtung 1408 erfolgt, dreht sich das Hemmungsrad 400 nicht mit und es erfolgt keine Bremswirkung.

### Bezugszeichenliste

- 100: Bremsförderrolle
- 101: Trommel
- 102: Förderrolle
- 104: Rollenleistenprofil
- 106: Zylinderstift
- 108: Lagerblock
- 110: Gummischicht
- 200: Trommeldrehachse
- 202: Zylinderstift
- 400: Zahnrad
- 402: Anker
- 404: Zylinderstift
- 406: Ankervorsprung
- 500: Zylinderstift
- 800: Rollenleistenregalfach
- 802: Rollenleiste
- 1000: Rollenbahnregal
- 1002: Rollenbahn
- 1200: Bremsförderrolle
- 1202: Zahnrad
- 1204: Abdeckungsteil
- 1206: Ausnehmung
- 1208: Schiene
- 1210: Lauffläche
- 1212: innerer Bereich
- 1214: Pendelkörper
- 1216: Pendelkörperteil
- 1218: Gewichte
- 1220: Lasche
- 1222: Pendelkörperteil
- 1224: Ausnehmung
- 1226: Anker
- 1228: Ankervorsprünge
- 1230: Zylinderstift
- 1232: Abdeckungsteil
- 1234: Ausnehmung
- 1236: Ausnehmung
- 1237: Verbindungssteg
- 1238: Halterungsstifte
- 1300: abgeschrägte Halterung
- 1302: Rückstellelement
- 1304: Drehrichtung
- 1306: Drehrichtung
- 1308: Halterung
- 1400: Vorsprung
- 1402: Rückstellelement
- 1404: Mitnahmeelement
- 1406: Drehrichtung
- 1408: Drehrichtung

## Patentansprüche

1. Bremsförderrolle (100) mit einer Trommel (101), einer Trommeldrehachse (200) und einem Hemmregler, wobei der Hemmregler ein Hemmungsrad (400) und ein Hemmstück (402) aufweist, wobei das Hemmungsrad (400) mit der Trommeldrehachse (200) verbunden ist und zusammen mit der Trommel (101) um die Trommeldrehachse (200) drehbar ist, wobei der Hemmregler einen Pendelkörper (1214) aufweist, wobei der Abstand des Pendelkörpers (1214) von der Trommeldrehachse (200) größer ist als der Radius der Trommel (101), wobei der Hemmregler eine Aufnahme für eine Hemmreglerachse (404) aufweist, wobei ein Lagerblock (108) eine Aufnahme für die Hemmreglerachse (404) aufweist, und wobei der Hemmregler frei drehbar um die Hemmreglerachse (404) mit dem Lagerblock (108) verbunden ist, **dadurch gekennzeichnet, dass** der Lagerblock (108) zumindest zwei Zylinderstiften (106) aufweist, und dass der Lagerblock (108) mit den zumindest zwei Zylinderstiften (106) an einer Rollenleiste befestigbar ist, wobei die Hemmreglerachse (404) und die Trommelachse (200) parallel zueinander und die Zylinderstifte (106) parallel zur Trommelachse (200) sind, wobei die zumindest zwei Zylinderstifte (106) gemeinsam auf einer Seite des Lagerblocks (108) angeordnet sind.

2. Bremsförderrolle nach Anspruch 1, wobei der Pendelkörper (1214) außerhalb der Trommel (101) angeordnet ist.

3. Bremsförderrolle nach Anspruch 2, wobei der Pendelkörper (1214) unterhalb der Zylinderstifte (106) angeordnet ist.

4. Bremsförderrolle nach Anspruch 3, wobei die Bremsförderrolle ein Gehäuse (1204; 1232) hat, wobei das Gehäuse eine obere Ausnehmung aufweist, wobei durch die obere Ausnehmung die Trommel (101) ragt, und wobei der Pendelkörper (1214) nach unten aus dem Gehäuse ragt.

5. Bremsförderrolle nach einem der vorhergehenden Ansprüche, wobei das Hemmungsrad (400) ein zahnrad ist, und wobei die Hemmung einen Anker (402) mit zwei Ankervorsprüngen (406) aufweist, wobei der Anker um eine Ankerachse (404) drehbar ist, und wobei die zwei Ankervorsprünge (406) zum Eingreifen in Zahnzwischenräume des Zahnrads ausgebildet sind.

6. Bremsförderrolle nach Anspruch 5, wobei der Anker (402) Schwunggewichte aufweist, und wobei die Eigenfrequenz des Ankers (402) mit den Schwunggewichten einstellbar ist.

7. Bremsförderrolle nach einem der vorhergehenden Ansprüche, wobei die Trommel (101) zumindest eine Aufnahme für zumindest einen weiteren Zylinderstift (202) aufweist, wobei das Hemmungsrad (400) zumindest eine Aufnahme für zumindest den weiteren Zylinderstift (202) aufweist, und wobei die Trommel (101) und das Hemmungsrad (400) mit dem zumindest einen weiteren Zylinderstift (202) verbunden sind.

8. Bremsförderrolle nach einem der vorhergehenden Ansprüche, wobei der Pendelkörper (1214) Ausnehmungen aufweist, wobei die Ausnehmungen zur Aufnahme von Gewichten (1218) ausgebildet sind.

9. Bremsförderrolle nach einem der vorhergehenden Ansprüche, wobei die Trommel (101) von einem Gummibelag (110) umfasst wird.

10. Bremsförderrolle nach einem der vorhergehenden Ansprüche, wobei der Lagerblock (108) in einer Drehrichtung frei drehbar ist, sodass die Bremswirkung nur in einer Transportrichtung auftritt.

11. Bremsförderrolle nach einem der Ansprüche 1-9, wobei die Drehung des Zahnrads (400) nur in einer Drehrichtung mit der Drehung der Trommel verbunden ist, sodass die Bremswirkung nur in einer Transportrichtung auftritt.

12. Bremsförderrolle nach einem der vorhergehenden Ansprüche, wobei sich der Hemmregler im Lagerblock (108) befindet.

13. Rollenbahn (1002) mit mehreren Förderrollen (102) und zumindest einer Bremsförderrolle (100, 1200) nach einem der vorigen Ansprüche, wobei die Bremsförderrolle (100, 1200) mit den zumindest zwei Zylinderstiften (106) über einen Befestigungsmechanismus an der und die Befestigungsmechanismus an der Rollenbahn (1002) befestigt ist und die Förderrollen (102) ebenfalls über den Befestigungsmechanismus an der Rollenbahn (1002) befestigt sind.

14. Rollenbahn nach Anspruch 13, wobei der Pendelkörper (1214) der Bremsförderrolle unterhalb der Zylinderstifte (106) angeordnet ist.

15. Rollenleiste (802) mit mehreren Förderrollen (102) und zumindest einer Bremsförderrolle (100, 1200) nach einem der vorigen Ansprüche 1 bis 12, wobei die Bremsförderrolle (100, 1200) mit den zumindest zwei Zylinderstiften (106) über einen Befestigungsmechanismus an der Rollenleiste (802) befestigt ist und die Förderrollen (102) ebenfalls über den Befestigungsmechanismus an der Rollenleiste (802) (802) befestigt sind.

16. Rollenleiste nach Anspruch 15, wobei der Pendelkörper (1214) der Bremsförderrolle unterhalb der Zylinderstifte (106) angeordnet ist.

17. Bausatz für eine Rollenbahn mit zumindest einer Bremsförderrolle nach einem der vorigen Ansprüche 1 bis 12, mehreren Förderrollen (102) und einem Rollenleistenprofil (104), wobei die Bremsförderrolle (100) mit den zumindest zwei Zylinderstiften (106) über einen Befestigungsmechanismus an der Rollenleiste (802) (802) befestigbar ist und die Förderrollen (102) ebenfalls über den Befestigungsmechanismus an der Rollenleiste (802) befestigbar sind.

## Claims

1. A brake transport roller (100) comprising a drum (101), a drum rotation shaft (200) and an inhibition regulator, wherein the inhibition regulator has an escape wheel (400) and an inhibition piece (402), wherein the escape wheel (400) is connected to the drum rotation shaft (200) and is rotatable about the drum rotation shaft (200) together with the drum (101), wherein the inhibition regulator has a pendulum body (1214), wherein the distance between the pendulum body (1214) and the drum rotation axis (200) is greater than the radius of the drum (101), wherein the inhibition regulator has a receptacle for an inhibition regulator shaft (404), wherein a bearing block (108) has a receptacle for the inhibition regulator shaft (404), and wherein the inhibition regulator is connected to the bearing block (108) so as to be freely rotatable about the inhibition regulator shaft (404), **characterised in that** the bearing block (108) has at least two cylinder pins (106), and **in that** the bearing block (108) can be fastened to a roller bar by means of the at least two cylinder pins, wherein the inhibition regulator shaft (404) and the drum shaft (200) are parallel to one another and the cylinder pins (106) are parallel to the drum shaft (200), wherein the at least two cylinder pins (106) are arranged commonly on one side of the bearing block (108).

2. The brake transport roller according to Claim 1, wherein the pendulum body (124) is arranged outside the drum (101).

3. The brake transport roller according to Claim 2, wherein the pendulum body (1214) is arranged beneath the cylinder pins (106).

4. The brake transport roller according to Claim 3, wherein the brake transport roller has a housing (1204; 1232), wherein the housing has an upper recess, wherein the drum (101) protrudes through the upper recess, and wherein the pendulum body (1214) protrudes downwardly from the housing.

5. The brake transport roller according to one of the preceding claims, wherein the escape wheel (400) is a gearwheel, and wherein the inhibition has an anchor (402) having two anchor protrusions (406), wherein the anchor is rotatable about an anchor shaft (404), and wherein the two anchor protrusions (406) are configured to engage in gaps between the teeth of the gearwheel.

6. The brake transport roller according to Claim 5, wherein the anchor (402) has swing weights, and wherein the natural frequency of the anchor (402) can be adjusted by means of the swing weights.

7. The brake transport roller according to one of the preceding claims, wherein the drum (101) has at least one receptacle for at least one further cylinder pin (202), wherein the escape wheel (400) has at least one receptacle for at least the further cylinder pin (202), and wherein the drum (101) and the escape wheel (400) are connected to the at least one further cylinder pin (202).

8. The brake transport roller according to one of the preceding claims, wherein the pendulum body (1214) has recesses, wherein the recesses are configured to receive weights (1218).

9. The brake transport roller according to one of the preceding claims, wherein the drum (101) is surrounded by a rubber coating (110).

10. The brake transport roller according to one of the preceding claims, wherein the bearing block (108) is freely rotatable in one direction of rotation, and therefore the braking effect occurs only in one direction of transport.

11. The brake transport roller according to one of Claims 1-9, wherein the rotation of the gearwheel (400) is connected only in one direction of rotation to the rotation of the drum, and therefore the braking effect occurs only in one direction of transport.

12. The brake transport roller according to one of the preceding claims, wherein the inhibition regulator is located in the bearing block (108).

13. A roller conveyor (1002) comprising a plurality of transport rollers (102) and at least one brake transport roller (100, 1200) according to one of the preceding claims, wherein the brake transport roller (100, 1200) is fastened to the roller conveyor by means of the at least two cylinder pins (106) via a fastening mechanism, and the transport rollers (102) are likewise fastened to the roller conveyor via the fastening mechanism.

14. The roller conveyor according to Claim 13, wherein the pendulum body (1214) of the brake transport roller is arranged beneath the cylinder pins (106).

15. A roller bar (802) comprising a plurality of transport rollers (102) and at least one brake transport roller (100, 1200) according to one of preceding Claims 1 to 12, wherein the brake transport roller (100, 1200) is fastened to the roller bar (802) by means of the at least two cylinder pins (106) via a fastening mechanism, and the transport rollers (102) are likewise fastened to the roller bar (802) via the fastening mechanism.

16. The roller bar according to Claim 15, wherein the pendulum body (1214) of the brake transport roller is arranged beneath the cylinder pins (106).

17. A kit for a roller conveyor, comprising at least one brake transport roller according to one of preceding Claims 1 to 12, a plurality of transport rollers (102) and a roller bar profile (104), wherein the brake transport roller (100) can be fastened to the roller bar (802) by means of the at least two cylinder pins (106) via a fastening mechanism, and the transport rollers (102) can likewise be fastened to the roller bar (802) via the fastening mechanism.

## Revendications

1. Rouleau de transport de freinage (100) avec un tambour (101), un axe de rotation de tambour (200) et un régulateur d'arrêt, dans lequel le régulateur d'arrêt comporte une roue d'arrêt (400) et une pièce d'arrêt (402), dans lequel la roue d'arrêt (400) est reliée à l'axe de rotation de tambour (200) et peut tourner ensemble avec le tambour (101) autour de l'axe de rotation de tambour (200), dans lequel le régulateur d'arrêt comporte un corps oscillant (1214), dans lequel l'espacement entre le corps oscillant (1214) et l'axe de rotation de tambour (200) est supérieur au rayon du tambour (101), dans lequel le régulateur d'arrêt comporte une admission pour l'axe de régulateur d'arrêt (404), dans lequel un bloc de support (108) comporte une admission pour l'axe de régulateur d'arrêt (404), et dans lequel le régulateur d'arrêt est relié au bloc de support (108) de manière à pouvoir tourner librement autour de l'axe de régulateur d'arrêt (404), **caractérisé en ce que** le bloc de support (108) comporte au moins deux goupilles cylindriques (106) et **en ce que** le bloc de support (108) peut être fixé à un tasseau à rouleau à l'aide des au moins deux goupilles cylindriques (106), dans lequel l'axe de régulateur d'arrêt (404) et l'axe de tambour (200) sont parallèles entre eux et les goupilles cylindriques (106) sont parallèles à l'axe de tambour (200), les au moins deux goupilles cylindriques (106) étant agencées ensemble d'un côté du bloc de support (108).

2. Rouleau de transport de freinage selon la revendication 1, dans lequel le corps oscillant (1214) est agencé à l'extérieur du tambour (101).

3. Rouleau de transport de freinage selon la revendication 2, dans lequel le corps oscillant (1214) est agencé en-dessous des goupilles cylindriques (106).

4. Rouleau de transport de freinage selon la revendication 3, dans lequel le rouleau de transport de freinage possède un logement (1204 ; 1232), dans lequel le logement comporte un évidement supérieur, dans lequel le tambour (101) fait saillie à travers l'évidement supérieur, et dans lequel le corps oscillant (1214) fait saillie vers le bas hors du logement.

5. Rouleau de transport de freinage selon l'une des revendications précédentes, dans lequel la roue d'arrêt (400) est une roue dentée, et dans lequel l'arrêt comporte une ancre (402) avec deux saillies d'ancre (406), dans lequel l'ancre peut tourner autour d'un axe d'ancre (404) et dans lequel les deux saillies d'ancre (406) sont conçues pour s'engager dans des espaces inter-dentaires de la roue dentée.

6. Rouleau de transport de freinage selon la revendication 5, dans lequel l'ancre (402) comporte des poids d'oscillation et dans lequel la fréquence propre de l'ancre (402) peut être réglée avec les poids d'oscillation.

7. Rouleau de transport de freinage selon l'une des revendications précédentes, dans lequel le tambour (101) comporte au moins une admission pour au moins une goupille cylindrique supplémentaire (202), dans lequel la roue d'arrêt (400) comporte au moins une admission pour l'au moins une goupille cylindrique supplémentaire (202), et dans lequel le tambour (101) et la roue d'arrêt (400) sont reliés à l'au moins une goupille cylindrique supplémentaire (202).

8. Rouleau de transport de freinage selon l'une des revendications précédentes, dans lequel le corps oscillant (1214) comporte des évidements, dans lequel les évidements sont conçus pour recevoir des poids (1218).

9. Rouleau de transport de freinage selon l'une des revendications précédentes, dans lequel le tambour (101) est encerclé par un revêtement de caoutchouc (110).

10. Rouleau de transport de freinage selon l'une des revendications précédentes, dans lequel le bloc de support (108) peut tourner librement dans une direction de rotation, de sorte que l'effet de freinage n'apparaît que dans une seule direction de transport.

11. Rouleau de transport de freinage selon l'une des revendications 1 à 9, dans lequel la rotation de la roue dentée (400) n'est associée à la rotation du tambour que dans une direction de rotation, de sorte que l'effet de freinage n'apparaît que dans une direction de transport.

12. Rouleau de transport de freinage selon l'une des revendications précédentes, dans lequel le régulateur d'arrêt se trouve dans le bloc de support (108).

13. Tapis à rouleaux (1002) avec plusieurs rouleaux de transport (102) et au moins un rouleau de transport de freinage (100, 1200) selon l'une des revendications précédentes, dans lequel le rouleau de transport de freinage (100, 1200) est fixé au tapis à rouleaux (1002) avec les au moins deux goupilles cylindriques (106) par le biais d'un mécanisme de fixation, et les rouleaux de transport (102) sont également fixés au tapis à rouleaux (1002) par le biais du mécanisme de fixation.

14. Tapis à rouleaux selon la revendication 13, dans lequel le corps oscillant (1214) du rouleau de transport de freinage est agencé en-dessous des goupilles cylindriques (106).

15. Tasseau à rouleaux (802) avec plusieurs rouleaux de transport (102) et au moins un rouleau de transport de freinage (100, 1200) selon l'une des revendications précédentes 1 à 12, dans lequel le rouleau de transport de frein (100, 1200) est fixé au tasseau à rouleaux (802) avec les au moins deux goupilles cylindriques (106) par le biais d'un mécanisme de fixation, et les rouleaux de transport (102) sont également fixés au tasseau à rouleaux (802) (802) par le biais du mécanisme de fixation.

16. Tasseau à rouleaux selon la revendication 15, dans lequel le corps oscillant (1214) du rouleau de transport de freinage est agencé en-dessous des goupilles cylindriques (106).

17. Kit de construction pour un tapis à rouleaux avec au moins un rouleau de transport de freinage selon l'une des revendications précédentes 1 à 12, plusieurs rouleaux de transport (102) et un profilé de tasseau à rouleaux (104), dans lequel le rouleau de transport de freinage (100) peut être fixé au tasseau à rouleaux (802) (802) avec les au moins deux goupilles cylindriques (106) par le biais d'un mécanisme de fixation, et les rouleaux de transport (102) peuvent également être fixés au tasseau à rouleaux (802) par le biais du mécanisme de fixation.
